# EUROPÄISCHE PATENTANMELDUNG

(11) **EP 1 022 407 A2**
(43) Veröffentlichungstag der Anmeldung: **26.07.2000**
(21) Anmeldenummer: 00100369.8
(22) Anmeldetag: 07.01.2000
(51) Int. Cl.: E04F 15/04, E04F 15/16, E04F 15/022

(54) **Fussboden aus Holz oder einem Holzwerkstoff**

(30) Priorität: 21.01.1999 DE 19902189
(71) Anmelder: Nolte, Friedhelm, 33732 Bielefeld (DE)
(72) Erfinder: Nolte, Friedhelm, 33732 Bielefeld (DE)
(74) Vertreter: Specht, Peter, Dipl.-Phys.

(57) **Zusammenfassung**

Ein Fußboden aus Holz oder einem Holzwerkstoff, bestehend aus einer Mehrzahl miteinander verbundener Stäbe (2), die auf einen Untergrund (4) aufgeklebt sind, ist so ausgebildet, daß zwischen den Stäben (2) und dem Untergrund (4) eine beidseitig mit einem Kleber versehene Trägerschicht angeordnet ist, die einerseits klebend am Untergrund (4) und anderseits klebend an den Stäben (2) anliegt.

## Beschreibung

Die vorliegende Erfindung betrifft einen Fußboden aus Holz oder einem Holzwerkstoff gemäß dem Oberbegriff des Anspruchs 1.

Es ist bekannt, zur Herstellung eines derartigen Fußbodens die Stäbe, beispielsweise einzelne Parkettstäbe direkt mit dem Untergrund zu verkleben, wozu ein Kleber vollflächig auf den Untergrund aufgetragen und anschließend die einzelnen Stäbe auf den Kleber aufgelegt werden.
Der Verbund der Stäbe untereinander erfolgt dabei meistens mittels Nut und Feder, die vielfach miteinander verleimt werden.

Als besonderer Nachteil bei dieser Art der Verlegung muß angesehen werden, daß der Kleber stark lösemittelhaltig ist, um so eine optimale Klebwirkung zu erzielen. Naturgemäß haben diese relativ hohen Lösemittelanteile Einfluß sowohl auf die gesundheitlichen Belastungen der den Fußboden verlegenden Person als auch auf die der nachfolgenden Bewohner, wobei ein Absinken der Raumluftkonzentration auf unbedenkliche Werte erst nach einigen Tagen eintritt. Bis dahin sind die Räumlichkeiten, wenn überhaupt, nur eingeschränkt benutzbar.

Weiter ist es bekannt, zunächst den Untergrund mit einem Kleber zu versehen, auf diesen eine elastische Matte aufzubringen und auf diese die Stäbe aufzukleben. Hier können zwar Kleber eingesetzt werden, die einen geringeren Lösemittelanteil aufweisen, jedoch ist das Verlegen dieses Fußbodens sehr aufwendig, zeitraubend und teuer.

Diese bekannten manuellen Kleberaufträge lassen jedoch keine genaue Dosierung zu, so daß häufig mehr Kleber aufgebracht wird als dies für einen festen Verbund notwendig wäre, was naturgemäß zu einer Kostenerhöhung beiträgt.

Der vorliegenden Erfindung liegt daher die Aufgabe zugrunde, einen Fußboden der gattungsgemäßen Art so auszubilden, daß er einfach und schnell verlegbar ist und die beim Verlegen auftretenden Lösungsmittelemissionen minimiert werden.

Diese Aufgabe wird durch einen Fußboden gelöst, der die Merkmale des Anspruchs 1 aufweist.

Ein separater Auftrag eines Klebers auf den Untergrund ist hierdurch nicht mehr erforderlich. Vielmehr liegt der Kleber sozusagen in gebundener Form vor, was insbesondere das Verlegen des Fußbodens wesentlich vereinfacht.

Dabei erlaubt die Erfindung zur Beschichtung der Trägerschicht einen Kleber zu verwenden, der nur einen geringen Anteil Lösungsmittel enthält, so daß die austretenden Emissionen in unbedenklicher Konzentration vorliegen.

Dies wirkt sich sowohl positiv auf die Belastung des Verlegers aus wie auch auf die Belastung der Raumluft und der sich daraus ergebenden kurzfristigen uneingeschränkten Benutzung der Räumlichkeiten.

Als besonders vorteilhaft ist die Verwendung von Polyurethan als Kleber anzusehen.

Neben den geringeren Arbeitsplatzkonzentrationen ist ein besonderer Vorteil der Erfindung darin zu sehen, daß das Verlegen des Fußbodens wesentlich einfacher und schneller als bisher möglich ist. Dabei kann die Trägerschicht mit einem Kleber versehen sein, der erst bei Belastung klebfähig ist, woraus sich eine problemlose Verarbeitung ergibt.

Die Erfindung erlaubt eine optimierte Mengendosierung des Klebers, was einen erheblichen Kostenvorteil darstellt.
Überdies besteht nun die Möglichkeit einen an den jeweiligen Holz- oder Fußbodentyp angepaßten Kleber einzusetzen.

Nach einem vorteilhaften Gedanken der Erfindung besteht die Trägerschicht aus einem elastischen Material, so daß luftfeuchtigkeitsbedingte Maßveränderungen der Stäbe ohne weiteres ausgeglichen werden.
Als in diesem Sinne besonders wirkungsvoll hat sich die netzartige Ausbildung der Trägerschicht gezeigt, bei der die einzelnen Netzfäden von dem Kleber ummantelt sind.

Ferner ist nach der Erfindung vorgesehen, als Trägerschicht einen Naturstoff zu verwenden, beispielsweise in Form eines aus geeignetem Material bestehenden Gewebes oder, bei einer geschlossen flächigen Ausbildung des Trägers, die Verwendung von Kork oder einem anderen trittschallhemmenden Material.
Zweckmäßigerweise ist der Kleber streifen- oder gitterförmig auf den geschlossenflächigen Träger aufgebracht.

Während ein Gewebe, das durchaus grobmaschig sein kann und insoweit den erwähnten Netzcharakter besitzt, als Rollenware vorliegen kann, wird bei Verwendung von Kork die Trägerschicht als Plattenware eingesetzt.

Der Vorteil des natürlichen Trägermaterials liegt vor allem darin, daß es ohne weiteres umweltgerecht entsorgt werden kann, vor allem dann, wenn der aufgebrachte Kleber gleichfalls nicht oder gering schadstoffbelastet ist.

Sowohl als Rollen- wie auch als Plattenware ist die Trägerschicht vor der Verarbeitung zumindest einseitig mit einer leicht lösbaren Schutzfolie abgedeckt, die verhindert, daß die aufeinanderliegenden Flächen miteinander verkleben. Für den Gebrauch der Trägerschicht ist die Schutzfolie lediglich abzuziehen.

Weitere vorteilhafte Ausgestaltungen der Erfindung sind in den Unteransprüchen gekennzeichnet.

Ein Ausführungsbeispiel der Erfindung wird nachfolgend anhand der beigefügten Zeichnung beschrieben.

Die einzige Figur zeigt einen erfindungsgemäßen Fußboden in einer Explosivdarstellung.

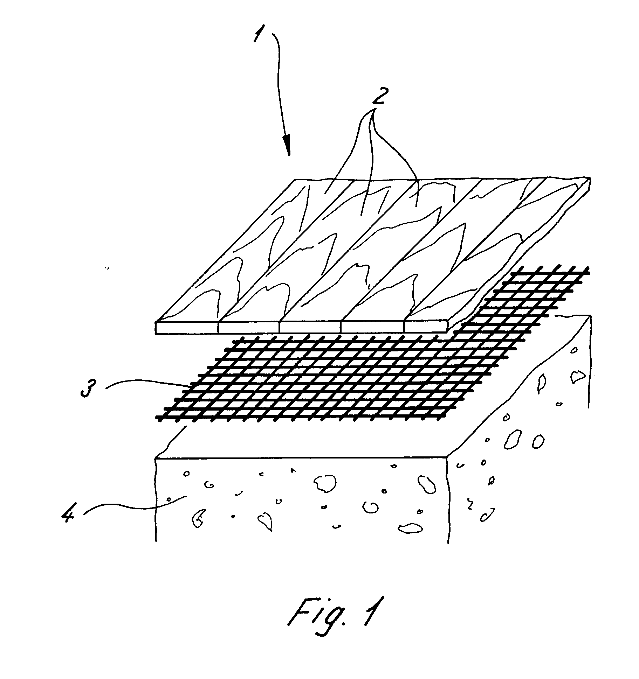

In der Figur 1 ist ein Fußboden erkennbar, der insgesamt mit dem Bezugszeichen 1 versehen ist. Dieser besteht aus einer Mehrzahl miteinander verbundener Stäbe 2, die aus Holz oder einem Holzwerkstoff bestehen.

Weiter ist ein Untergrund 4 dargestellt, wie beispielsweise in Form einer Betondecke oder eines Estrichauftrags.

Zwischen dem Fußboden 1 und dem Untergrund 4 ist eine Trägerschicht 3 angeordnet, die beidseitig mit einem Kleber versehen ist und eine gitterartige Struktur aufweist, deren Gitterfäden vom Kleber ummantelt sind.

Im verlegten Zustand liegt die Trägerschicht 3 auf dem Untergrund 4 auf, während der Fußboden 2 auf der Oberseite der Trägerschicht 3 aufliegt.

Durch den Kleber, mit dem die Trägerschicht 3 auf dem Untergrund 4 befestigt ist und durch den der Fußboden 1 auf der Trägerschicht fixiert ist, wird ein fester Verbund zwischen dem Untergrund und dem Fußboden 1 geschaffen, der trotzdem, insbesondere bei einer elastischen Ausbildung des den Kleber tragenden Trägerstoffs der Trägerschicht 3, eine relative Bewegbarkeit des Fußboden 1 gegenüber dem Untergrund 4 ermöglicht, so daß feuchtigkeitsbedingte Längen- bzw. Breitenschwankungen des Fußboden 1 ohne weiteres ausgeglichen werden.

## Patentansprüche

1. Fußboden aus Holz oder einem Holzwerkstoff, bestehend aus einer Mehrzahl miteinder verbundener Stäbe (2), die auf auf einem Untergrund (4) aufgeklebt sind, **dadurch gekennzeichnet,** daß zwischen den Stäben (2) und dem Untergrund (4) eine vorab beidseitig mit einem Kleber versehene Trägerschicht angeordnet ist, die einerseits klebend am Untergrund (4) und andererseits klebend an den Stäben (2) anliegt.

2. Fußboden nach Anspruch 1, **dadurch gekennzeichnet, daß** die Trägerschicht mit einem solchen Kleber versehen ist, der bei Belastung klebfähig ist.

3. Fußboden nach Anspruch 1, **dadurch gekennzeichnet, daß** die Trägerschicht (3) elastisch ausgebildet ist.

4. Fußboden nach einem der Ansprüche 1 - 3, **dadurch gekennzeichnet, daß** die Trägerschicht (3) aus einem natürlichen Material, wie Kork oder Fasern besteht.

5. Fußboden nach Anspruch 4, **dadurch gekennzeichnet, daß** die Fasern als Gewebe ausgebildet sind.

6. Fußboden nach Anspruch 5, **dadurch gekennzeichnet, daß** das Gewebe grobmaschig ausgebildet ist.

7. Fußboden nach Anspruch 1, **dadurch gekennzeichnet, daß** der Kleber einen geringen Lösungsmittelanteil aufweist.

8. Fußboden nach Anspruch 6, **dadurch gekennzeichnet, daß** die Gewebefäden vom Kleber ummantelt sind.

9. Fußboden nach Anspruch 1, **dadurch gekennzeichnet, daß** bei Verwendung einer vollflächigen Trägerschicht (3) der Kleber streifen- oder gitterförmig aufgetragen ist.
